# EUROPEAN PATENT SPECIFICATION

(11) **EP 4 212 421 B1**
(45) Date of publication and mention of the grant of the patent: **18.09.2024**
(21) Application number: 22212500.7
(22) Date of filing: 09.12.2022
(51) Int. Cl.: B62J 17/06, B62J 7/08, B62J 9/12

(54) **STRADDLED VEHICLE**
GRÄTSCHSITZFAHRZEUG
VÉHICULE À SELLE

(30) Priority: 14.01.2022 JP 2022004572
(43) Date of publication of application: 19.07.2023
(73) Proprietor: Yamaha Hatsudoki Kabushiki Kaisha, Iwata-shi, Shizuoka 438-8501 (JP)
(72) Inventor: Terada, Hirohisa, Iwata-shi, Shizuoka (JP); Suzuki, Masanori, Iwata-shi, Shizuoka (JP); Shimizu, Kenta, Iwata-shi, Shizuoka (JP)
(74) Representative: Grünecker Patent- und Rechtsanwälte PartG mbB

(56) References cited:
- WO-A1-2021/181942
- CN-U- 202 847 898
- CN-U- 210 235 187
- JP-A- 2020 050 217
- US-A1- 2011 057 431

## Description

The present invention relates to a straddled vehicle according to the preamble of independent claim 1. Such a straddled vehicle can be taken from the prior art document WO 2021/181942 A1.

There is a type of straddled vehicle that a leg shield is provided with a loading hook. For example, JP H08-230739 A describes a straddled vehicle that a leg shield is divided into an upper inner member and a lower inner member. The upper inner member is disposed above the lower inner member and is joined thereto by screws. The loading hook is connected to the upper inner member. Besides, the leg shield is provided with an inner rack for accommodating items. The bottom surface of the inner rack is formed by part of the upper inner member. The front surface of the inner rack is formed by part of the lower inner member.

In the straddled vehicle described above, a load acts on the upper inner member from an item hooked on the loading hook. Besides, a load acts on the upper inner member from an item accommodated in the inner rack as well. However, in the straddled vehicle described above, the leg shield is divided into the upper and lower inner members. Because of this, when divided into components, the leg shield has a lower support strength than when integrally formed as a single component.

Contrarily speaking, when integrally formed as a single component, the leg shield has a higher support strength than when divided into components. However, the integrally formed leg shield, when provided with a loading hook or an accommodation pocket, is required to be shaped to exert a high stiffness against a load acting thereon from the loading hook or the accommodation pocket. Alternatively, for enhancement in stiffness of the integrally formed leg shield, it is required to separately provide fastening points at which the integrally formed leg shield is fastened to a frame. Because of this, the integrally formed leg shield is made complicated in structure.

It is an object of the present invention to provide a straddled vehicle that can achieve the following: inhibiting a leg shield from being made complicated in structure, and simultaneously, enhancing the leg shield in support strength and stiffness. According to the present invention said object is solved by a straddled vehicle having the features of independent claim 1. Preferred embodiments are laid down in the dependent claims.

A straddled vehicle according to an aspect of the present teaching includes a vehicle body frame, a leg shield, and a loading hook. The vehicle body frame includes a head pipe and a down frame. The down frame extends downward from the head pipe. The leg shield is disposed behind the head pipe and the down frame. The loading hook is disposed on the leg shield.

The leg shield includes an upper panel and a lower panel. The lower panel is disposed below the upper panel. The lower panel is separated from the upper panel. The lower panel includes a bottom panel portion and an extending portion. The extending portion is integrated with the bottom panel portion. The extending portion extends from the bottom panel portion to an upper side than a lower end of the upper panel. The loading hook is fixed to the vehicle body frame through the extending portion.

In the straddled vehicle according to the present aspect, the extending portion, on which the loading hook is disposed, is integrated with the bottom panel portion. Because of this, a load applied by an item hooked on the loading hook is supported by the bottom panel portion through the extending portion. Accordingly, the leg shield is enhanced in strength for supporting the item. Besides, the extending portion is fixed to the vehicle body frame through the loading hook. Because of this, the leg shield can be inhibited from being made complicated in structure, while the lower panel is enhanced in stiffness.

The straddled vehicle may further include a seat and a foot board. The seat may be disposed behind the leg shield. The foot board may be disposed between the leg shield and the seat. The bottom panel portion may be connected to the foot board. In this case, the lower panel is connected to the foot board and is thereby further enhanced in strength for supporting the item.

The upper panel includes a pocket portion including a first opening. The first opening is disposed lateral to the extending portion. The straddled vehicle further includes an inner case. The inner case is disposed inside the upper panel. The inner case is disposed in the pocket portion. The inner case is connected to the lower panel. In this case, the inner case is connected to the lower panel and is thereby enhanced in support strength.

The inner case may be integrated with the lower panel. In this case, the inner case is integrated with the lower panel and is thereby further enhanced in support strength.

The upper panel may include a trunk for accommodating an item. The trunk may include a second opening and a lid portion. The second opening may be disposed lateral to the extending portion. The lid portion may open and close the second opening. The straddled vehicle may further include a hinge portion. The hinge portion may be disposed in the trunk. The hinge portion may support the lid portion so as to make the lid portion rotatable. The hinge portion may be connected to the lower panel. In this case, the hinge portion is connected to the lower panel and is thereby enhanced in support strength.

The hinge portion may be integrated with the lower panel. In this case, the hinge portion is integrated with the lower panel and is thereby further enhanced in support strength.

The loading hook may be fixed to the head pipe. In this case, the loading hook is fixed to the head pipe; hence, the lower panel is enhanced in stiffness.

The extending portion may extend in an up-and-down direction in a middle of the led shield. The extending portion may be shaped to protrude rearward. In this case, the extending portion has the protruding shape and is thereby enhanced in stiffness.

The upper panel may be a painted component. The lower panel may be an unpainted component. In this case, the upper panel is the painted component; hence, the vehicle is enhanced in aesthetic properties. Besides, the item hooked on the loading hook is likely to contact with the extending portion. However, the extending portion is the unpainted component; hence, even when friction occurs between the extending portion and the item hooked on the loading hook, scratch on paint does not occur.

The extending portion may be smaller than the bottom panel portion in a right-and-left direction. In this case, the extending portion, provided as the unpainted component, is small; hence, degradation in aesthetic properties of the straddled vehicle can be inhibited.

The upper panel may include a first side panel. The first side panel may be disposed laterally on one side of the extending portion. The extending portion may be smaller than the first side panel in the right-and-left direction. In this case, the extending portion, provided as the unpainted component, is small; hence, degradation in aesthetic properties of the straddled vehicle can be inhibited.

The upper panel may include a second side panel disposed laterally on the other side of the extending portion. The extending portion may be smaller than the second side panel in the right-and-left direction. In this case, the extending portion, provided as the unpainted component, is small; hence, degradation in aesthetic properties of the straddled vehicle can be inhibited.

### BRIEF DESCRIPTION OF THE DRAWINGS

FIG. 1 is a side view of a straddled vehicle.
FIG. 2 is a view of a front part of the straddled vehicle obliquely seen from behind.
FIG. 3 is a rear view of a leg shield.
FIG. 4 is a perspective view of the leg shield.
FIG. 5 is a rear view of an upper panel.
FIG. 6 is a rear view of a lower panel.
FIG. 7 is a perspective view of the lower panel.
FIG. 8 is a cross-sectional view of FIG. 3 taken along line VIII-VIII.
FIG. 9 is a cross-sectional view of FIG. 3 taken along line IX-IX.

### DETAILED DESCRIPTION OF EMBODIMENTS

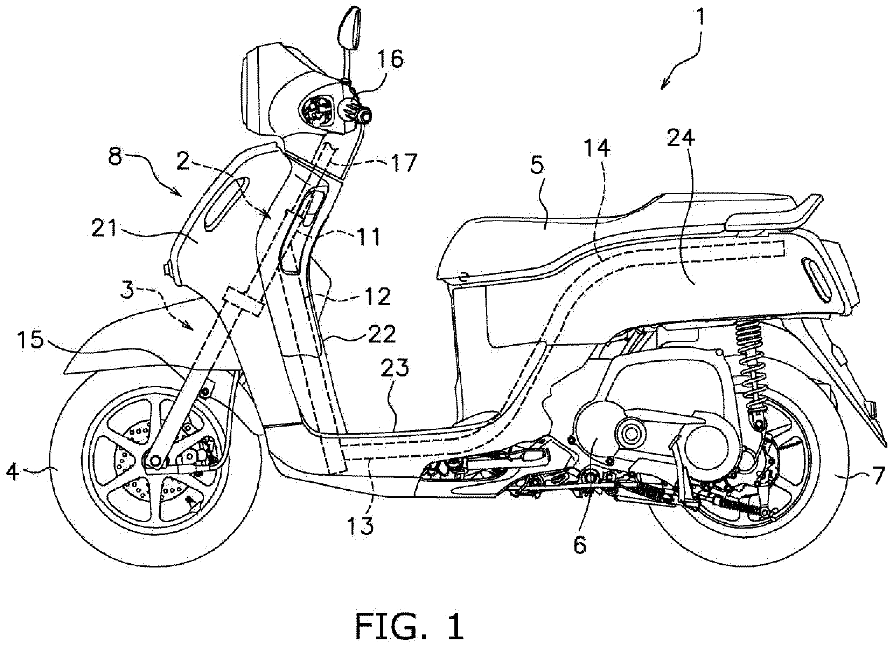

A straddled vehicle 1 according to an embodiment will be hereinafter explained with reference to drawings. FIG. 1 is a side view of the straddled vehicle 1. In the present embodiment, the straddled vehicle 1 is a scooter. As shown in FIG. 1, the straddled vehicle 1 includes a vehicle body frame 2, a steering device 3, a front wheel 4, a seat 5, a power unit 6, a rear wheel 7, and a vehicle body cover 8. It should be noted that in the following explanation, front, rear, right, and left directions are defined as indicating front, rear, right, and left directions seen from a driver seated on the seat 5. Accordingly, a front-and-rear direction of the vehicle extends from the rear of the vehicle to the front of the vehicle and vice versa. A right-and-left direction of the vehicle extends from the left of the vehicle to the right of the vehicle and vice versa. The right-and-left direction of the vehicle is synonymous to the width direction of the vehicle. An up-and-down direction of the vehicle extends from bottom-up the vehicle and vice versa. The up-and-down direction of the vehicle is synonymous to the vertical direction of the vehicle.

The vehicle body frame 2 includes a head pipe 11, a down frame 12, a lower frame 13, and a seat frame 14. The head pipe 11 is disposed in the middle of the straddled vehicle 1 in a right-and-left direction. The head pipe 11 extends forward and downward. The down frame 12 extends downward from the head pipe 11. The lower frame 13 extends rearward from a lower portion of the down frame 12. The seat frame 14 extends rearward and upward from a rear portion of the lower frame 13.

The steering device 3 is supported by the head pipe 11 so as to be turnable. The steering device 3 supports the front wheel 4 such that the front wheel 4 is rotatable. The steering device 3 includes a front fork 15, a handle member 16, and a steering shaft 17. The front wheel 4 is supported by the front fork 15 so as to be rotatable. The front fork 15 is connected to the steering shaft 17. The steering shaft 17 is connected at the upper end thereof to the handle member 16. The steering shaft 17 is supported by the head pipe 11 so as to be turnable.

The seat 5 is disposed behind the head pipe 11. The seat 5 is disposed above the seat frame 14. The seat 5 is supported by the seat frame 14 through a stay not shown in the drawings. The power unit 6 is disposed below the seat 5. The power unit 6 includes an engine. Alternatively, the power unit 6 may include an electric motor. The rear wheel 7 is supported by the power unit 6 so as to be rotatable.

The vehicle body cover 8 includes a front cover 21, a leg shield 22, a foot board 23, and a rear cover 24. The front cover 21 and the leg shield 22 are disposed in a front part of the straddled vehicle 1. The front cover 21 is disposed in front of the head pipe 11 and the down frame 12. The leg shield 22 is disposed behind the head pipe 11 and the down frame 12. The seat 5 is disposed behind the leg shield 22.

The foot board 23 is disposed between the leg shield 22 and the seat 5. The foot board 23 extends rearward from the lower end of the leg shield 22. The foot board 23 is disposed below and in front of the seat 5. The foot board 23 has a flat shape in a right-and-left direction. However, the foot board 23 may include a center tunnel portion protruding upward from the middle thereof located in the right-and-left direction. The rear cover 24 is disposed in a rear part of the straddled vehicle 1. The rear cover 24 is disposed below the seat 5. The rear cover 24 is disposed above the engine and the rear wheel 7.

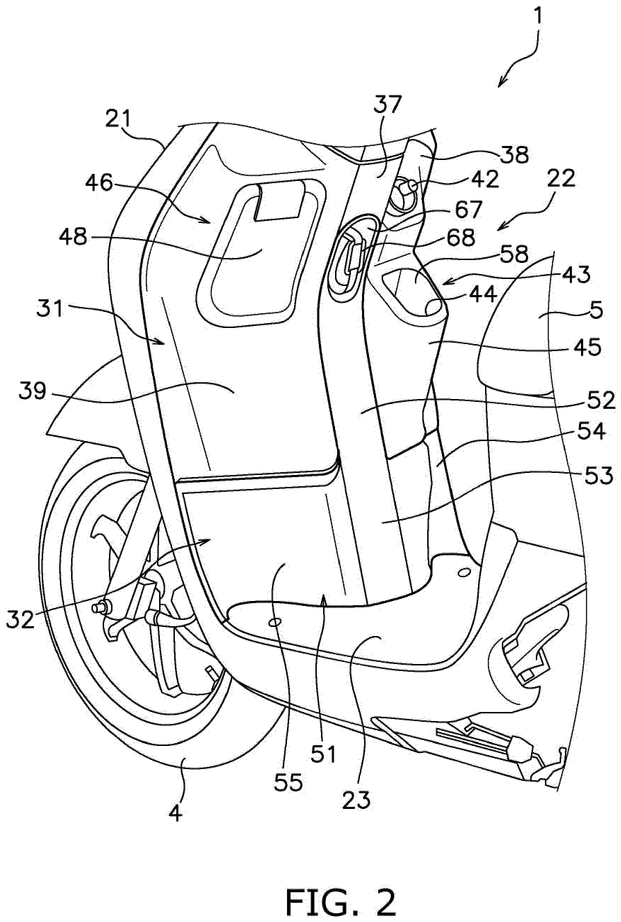

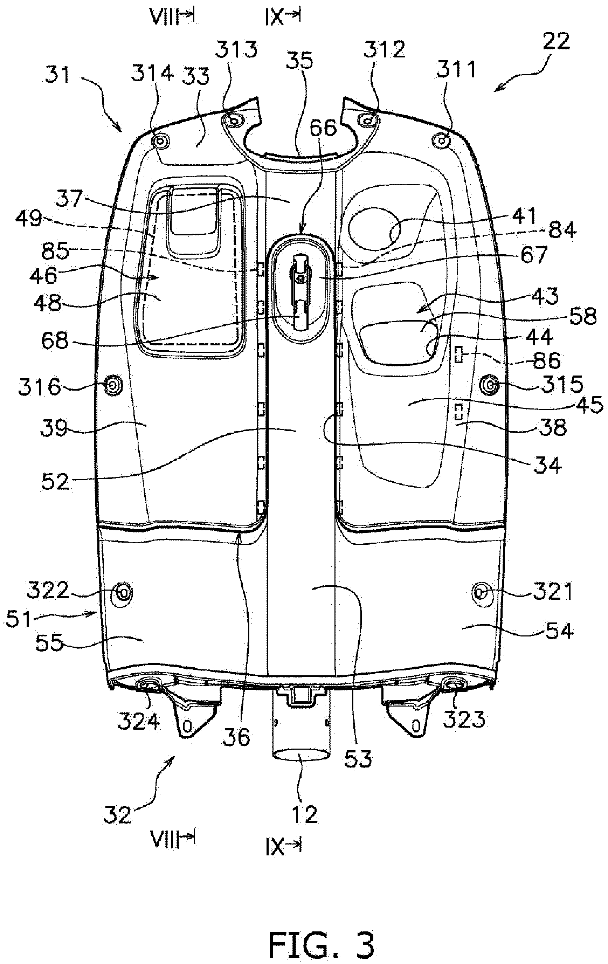

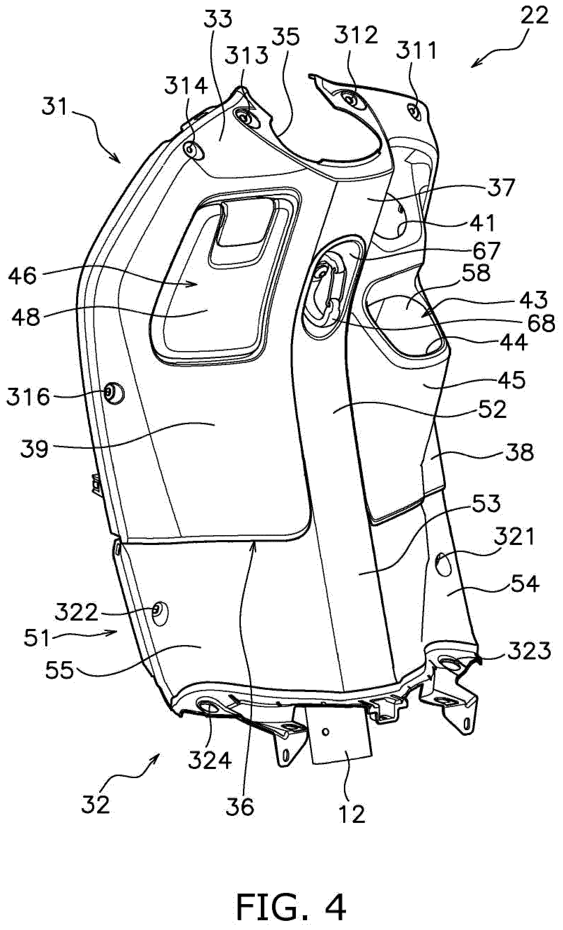

FIG. 2 is a view of the front part of the straddled vehicle 1 obliquely seen from behind. FIG. 3 is a rear view of the leg shield 22. FIG. 4 is a perspective view of the leg shield 22. As shown in FIGS. 2 to 4, the leg shield 22 includes an upper panel 31 and a lower panel 32. The lower panel 32 is disposed below the upper panel 31. The upper panel 31 is a painted component. The lower panel 32 is an unpainted component.

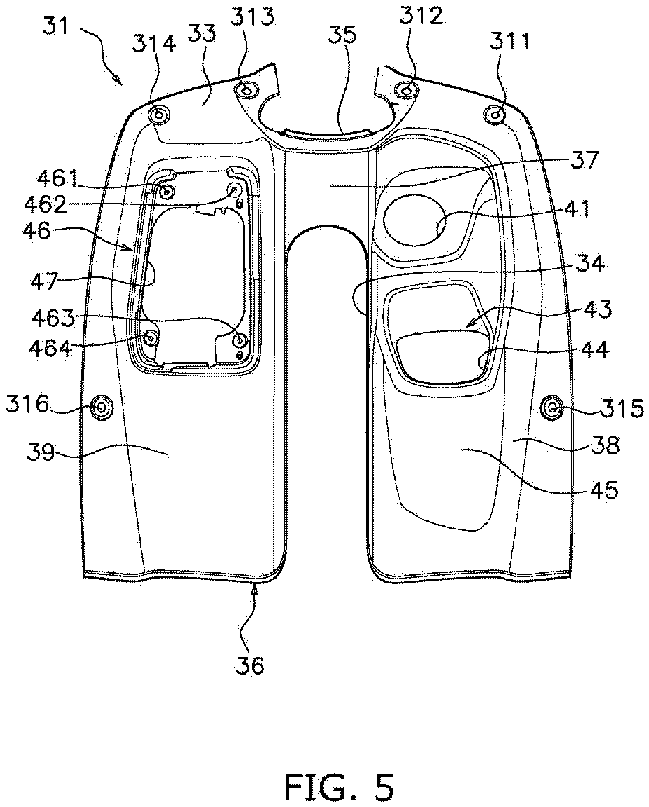

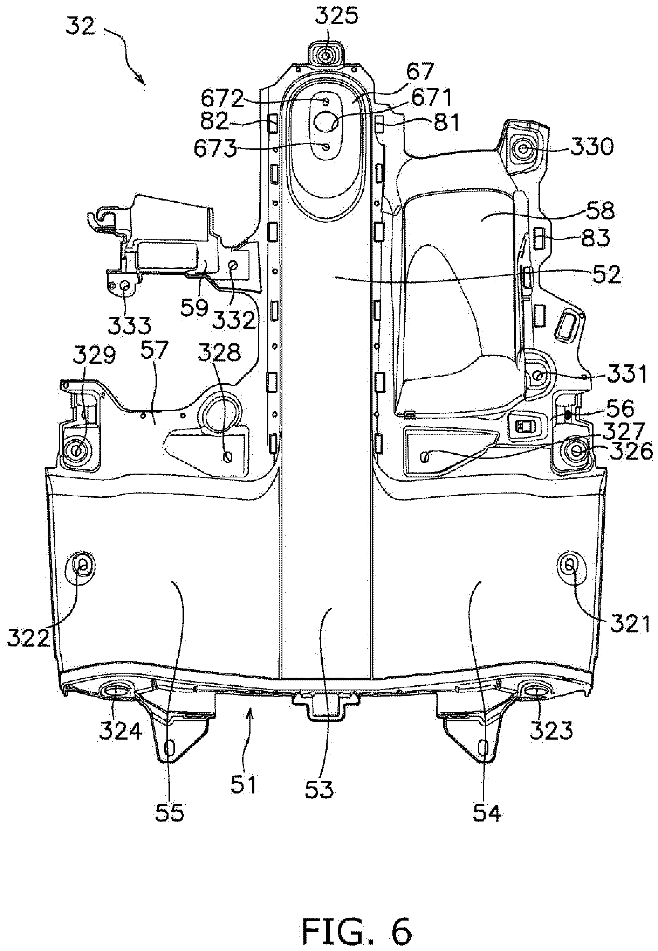

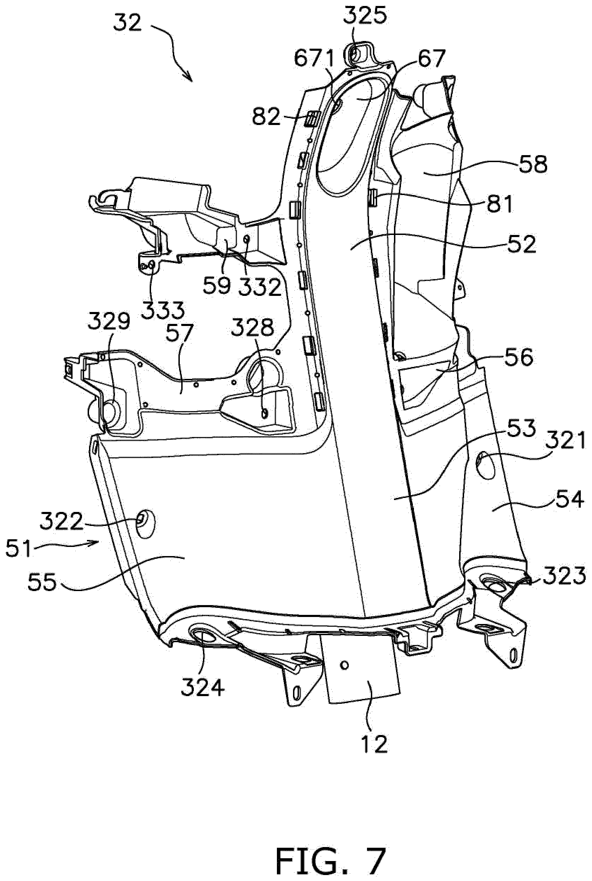

FIG. 5 is a rear view of the upper panel 31. FIG. 6 is a rear view of the lower panel 32. FIG. 7 is a perspective view of the lower panel 32. As shown in FIGS. 5 to 7, the upper and lower panels 31 and 32 are separated from each other. As shown in FIG. 5, the upper panel 31 includes an upper surface 33 and a middle recess 34. The upper surface 33 is provided with an upper opening 35. The upper opening 35 is opened upward. The upper opening 35 causes the steering shaft 17 described above to penetrate therethrough. The middle recess 34 is disposed in the middle of the leg shield 22 in the right-and-left direction. The middle recess 34 extends upward from a lower end 36 of the upper panel 31.

The upper panel 31 includes a middle upper portion 37, a first side panel 38, and a second side panel 39. The middle upper portion 37 is disposed in the middle of the leg shield 22 in the right-and-left direction. The middle upper portion 37 is disposed above the middle recess 34. The middle upper portion 37 is shaped to protrude further rearward than the first side and second side panels 38 and 39.

The first side panel 38 is disposed laterally on one side of the middle recess 34. The second side panel 39 is disposed laterally on the other side of the middle recess 34. The middle recess 34 is disposed between the first side and second side panels 38 and 39 in the right-and-left direction. In the present embodiment, the first side panel 38 is disposed on the right of the middle recess 34, whereas the second side panel 39 is disposed on the left of the middle recess 34. However, the positions of the first side and second side panels 38 and 39 may be bilaterally reversed to those herein configured.

The upper panel 31 includes a key opening 41. As shown in FIG. 2, a key switch 42 is disposed in the key opening 41. The key switch 42 is operated to start and stop the power unit 6. The key opening 41 is provided in the first side panel 38. The key opening 41 is disposed lateral to the middle upper portion 37.

The upper panel 31 includes a pocket portion 43 for accommodating an item. The pocket portion 43 is provided in the first side panel 38. The pocket portion 43 is disposed below the key switch 42. The pocket portion 43 is disposed lateral to the middle recess 34. As shown in FIG. 5, the pocket portion 43 includes a first opening 44 and a sidewall 45. The first opening 44 is disposed below the key opening 41. The first opening 44 is obliquely opened rearward and upward. The sidewall 45 protrudes from the first side panel 38. The sidewall 45 extends downward from the first opening 44.

The upper panel 31 includes a trunk 46 for accommodating an item. The trunk 46 is disposed on the opposite side of the pocket portion 43 in the right-and-left direction. The trunk 46 is provided in the second side panel 39. The trunk 46 includes a second opening 47 and a lid portion 48. The second opening 47 is opened rearward. The lid portion 48 opens and closes the second opening 47. In a vehicle rear view, the second opening 47 is located at least in part at an identical height to the middle recess 34. In the vehicle rear view, the second opening 47 is located at least in part at an identical height to the key opening 41. In the vehicle rear view, the second opening 47 is located at least in part at an identical height to the first opening 44.

A trunk case 49 shown in FIG. 3 is disposed in the second opening 47. The trunk case 49 is disposed inside the lid portion 48. The trunk case 49 is attached to the upper panel 31. As shown in FIG. 5, the upper panel 31 includes bolt holes 461 to 464 disposed in the surroundings of the second opening 47. The trunk case 49 is fixed to the upper panel 31 by bolts inserted through the bolt holes 461 to 464.

The lower panel 32 is a panel integrally formed as a single component. The lower panel 32 includes a bottom panel portion 51 and an extending portion 52. As shown in FIG. 2, the bottom panel portion 51 is connected to the foot board 23. The bottom panel portion 51 includes a middle bottom portion 53, a first bottom panel 54, and a second bottom panel 55. The middle bottom portion 53 is disposed in the middle of the leg shield 22 in the right-and-left direction. The middle bottom portion 53 protrudes further rearward than the first and second bottom panels 54 and 55.

The first bottom panel 54 is disposed laterally on one side of the middle bottom portion 53. The second bottom panel 55 is disposed laterally on the other side of the middle bottom portion 53. The middle bottom portion 53 is disposed between the first and second bottom panels 54 and 55 in the right-and-left direction. In the present embodiment, the first bottom panel 54 is disposed on the right of the middle bottom portion 53, whereas the second bottom panel 55 is disposed on the left of the middle bottom portion 53. However, the positions of the first and second bottom panels 54 and 55 may be bilaterally reversed to those herein configured. The first bottom panel 54 is disposed below the first side panel 38. The second bottom panel 55 is disposed below the second side panel 39.

The lower panel 32 includes a first inner panel 56 and a second inner panel 57. The first and second inner panels 56 and 57 are disposed inside the upper panel 31. The first and second inner panels 56 and 57 overlap with the upper panel 31 in the vehicle rear view. The first inner panel 56 is disposed above the first bottom panel 54. The first inner panel 56 is connected to the first bottom panel 54. The first inner panel 56 is disposed inside the first side panel 38. The first inner panel 56 overlaps with the first side panel 38 in the vehicle rear view. The second inner panel 57 is disposed above the second bottom panel 55. The second inner panel 57 is connected to the second bottom panel 55. The second inner panel 57 is disposed inside the second side panel 39. The second inner panel 57 overlaps with the second side panel 39 in the vehicle rear view.

The lower panel 32 includes an inner case 58. The inner case 58 is disposed inside the upper panel 31. As shown in FIG. 3, the inner case 58 is disposed in the pocket portion 43. The inner case 58 is disposed in the first opening 44. The inner case 58 is shaped to be recessed rearward. The inner case 58 is disposed on the right of the extending portion 52. The inner case 58 is integrated with the extending portion 52. The inner case 58 is disposed above the first inner panel 56. The inner case 58 is integrated with the first inner panel 56.

The lower panel 32 includes a hinge portion 59. The hinge portion 59 is disposed in the trunk 46 and supports the lid portion 48 so as to make the lid portion 48 rotatable. The hinge portion 59 is disposed on the left of the extending portion 52. The hinge portion 59 is disposed above the second inner panel 57. The hinge portion 59 is disposed away from the second inner panel 57. The hinge portion 59 is integrated with the extending portion 52.

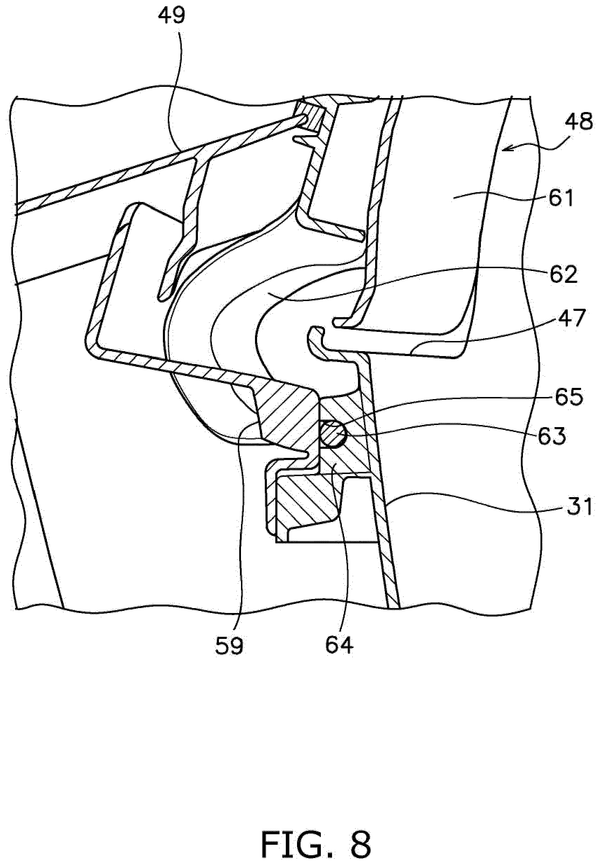

FIG. 8 is a cross-sectional view taken along line XIII-XIII in FIG. 3. As shown in FIG. 8, the lid portion 48 includes a lid body 61, an arm 62, and a rotational shaft 63. The arm 62 is connected to the lid body 61. The rotational shaft 63 is connected to the arm 62. The upper panel 31 includes a lid support portion 64. The lid support portion 64 is provided on the inner surface of the upper panel 31. The lid support portion 64 includes a recess 65. The rotational shaft 63 of the lid portion 48 is disposed in the recess 65. The hinge portion 59 contacts with the lid support portion 64 from behind so as to close the recess 65. The rotational shaft 63 is rotatably held between the hinge portion 59 and the lid support portion 64.

The extending portion 52 is integrated with the bottom panel portion 51. The extending portion 52 is provided in the middle of the leg shield 22 so as to extend in the up-and-down direction. The extending portion 52 is shaped to protrude rearward. The extending portion 52 is connected to the middle bottom portion 53. The extending portion 52 is integrated with the middle bottom portion 53. The extending portion 52 is disposed below the middle upper portion 37. The extending portion 52 is separated from the middle upper portion 37. The extending portion 52 is disposed between the middle upper portion 37 and the middle bottom portion 53. The extending portion 52 is disposed to be flush with the middle upper portion 37. The extending portion 52 is disposed to be flush with the middle bottom portion 53.

The extending portion 52 extends from the bottom panel portion 51 further upward than the lower end 36 of the upper panel 31. The extending portion 52 is disposed in the middle recess 34. The extending portion 52 is disposed between the first side and second side panels 38 and 39 in the right-and-left direction. The first side panel 38 is disposed on the right of the extending portion 52. The second side panel 39 is disposed on the left of the extending portion 52.

The extending portion 52 is disposed between the first and second openings 44 and 47 in the right-and-left direction. The first opening 44 is disposed on the right of the extending portion 52. The second opening 47 is disposed on the left of the extending portion 52. An upper end 66 of the extending portion 52 is located on an upper side than the first opening 44. The upper end 66 of the extending portion 52 is located at an identical height to part of the second opening 47.

The extending portion 52 is smaller than the first side panel 38 in the right-and-left direction. The extending portion 52 is smaller than the second side panel 39 in the right-and-left direction. The extending portion 52 is smaller than the bottom panel portion 51 in the right-and-left direction. The extending portion 52 is smaller than the first bottom panel 54 in the right-and-left direction. The extending portion 52 is smaller than the second bottom panel 55 in the right-and-left direction.

The extending portion 52 includes a hook mount portion 67. The hook mount portion 67 is provided in an upper part of the extending portion 52. The hook mount portion 67 is shaped to be recessed forward. The hook mount portion 67 is shaped to be elongated in the up-and-down direction. The leg shield 22 is provided with a loading hook 68. The loading hook 68 is disposed on the extending portion 52. The loading hook 68 is disposed in the hook mount portion 67.

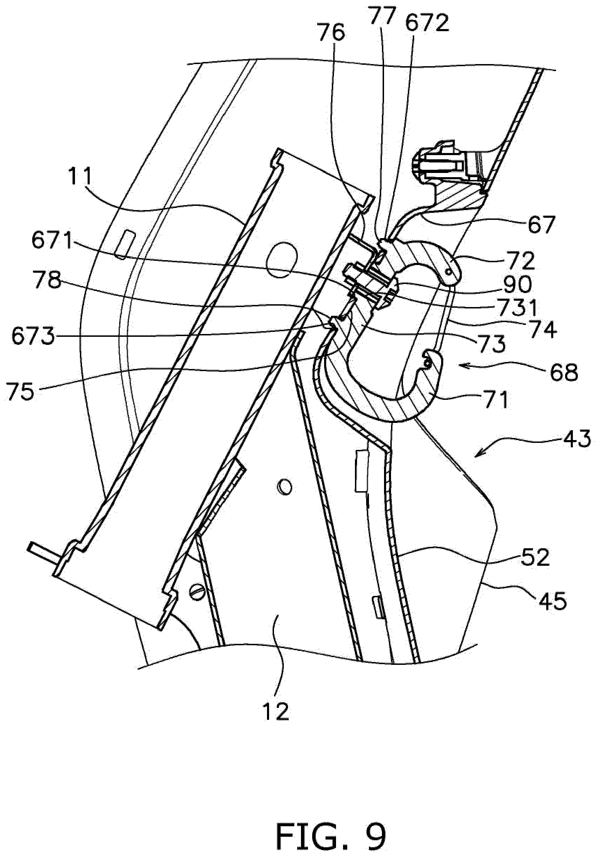

FIG. 9 is a cross-sectional view of FIG. 3 taken along line IX-IX. As shown in FIG. 9, the loading hook 68 is fixed to the head pipe 11 through the extending portion 52. The loading hook 68 includes a first hook portion 71, a second hook portion 72, and an intermediate portion 73. The first hook portion 71 is bent forward from the lower end of the intermediate portion 73. The first hook portion 71 has an upwardly curved shape. The first hook portion 71 is a portion on which an item is hooked. The second hook portion 72 is bent forward from the upper end of the intermediate portion 73. The second hook portion 72 has a downwardly curved shape. The second hook portion 72 is a portion to which a retaining member 74 is attached. The retaining member 74 is locked to the first hook portion 71 so as to prevent the item from coming off from the loading hook 68.

The intermediate portion 73 is disposed between the first and second hook portions 71 and 72. The intermediate portion 73 is shaped straight along a bottom surface 75 of the hook mount portion 67. The intermediate portion 73 includes a bolt hole 731. As shown in FIGS. 6 and 7, the extending portion 52 includes a hook hole 671. The hook hole 671 is provided in the hook mount portion 67. As shown in FIG. 9, a hook connecting portion 76 is fixed to the head pipe 11. The loading hook 68 is fixed to the hook connecting portion 76 by a bolt 90 inserted through the bolt hole 731 and the hook hole 671.

The loading hook 68 includes a first protrusion 77 and a second protrusion 78. The first and second protrusions 77 and 78 protrude from the intermediate portion 73. The first protrusion 77 is disposed above the bolt hole 731. The second protrusion 78 is disposed below the bolt hole 731. As shown in FIG. 6, the extending portion 52 includes a first lock hole 672 and a second lock hole 673. The first and second lock holes 672 and 673 are provided in the hook mount portion 67. The first protrusion 77 is disposed in the first lock hole 672. The second protrusion 78 is disposed in the second lock hole 673. Accordingly, the loading hook 68 is prevented from rotating.

As shown in FIG. 3, the upper panel 31 includes a plurality of bolt holes 311 to 316. The bolt holes 311 to 314 are provided in the upper surface 33. The bolt hole 315 is provided in the first side panel 38. The bolt hole 316 is provided in the second side panel 39. The upper panel 31 is fixed to the front cover 21 by bolts inserted through the bolt holes 311 to 316 herein described.

The lower panel 32 includes a plurality of bolt holes 321 and 322. The bolt hole 321 is provided in the first bottom panel 54. The bolt hole 322 is provided in the second bottom panel 55. The lower panel 32 is fixed to the front cover 21 by bolts inserted through the bolt holes 321 and 322. The lower panel 32 includes a plurality of bolt holes 323 and 324. The bolt hole 323 is provided in the first bottom panel 54. The bolt hole 324 is provided in the second bottom panel 55. The lower panel 32 is fixed to the foot board 23 by bolts inserted through the bolt holes 323 and 324 herein described.

As shown in FIG. 6, the lower panel 32 includes a plurality of bolt holes 325 to 333. The bolt hole 325 is provided in the extending portion 52. The bolt holes 326 and 327 are provided in the first inner panel 56. The bolt holes 328 and 329 are provided in the second inner panel 57. The bolt holes 330 and 331 are provided in the inner case 58. The bolt holes 332 and 333 are provided in the hinge portion 59. The upper panel 31 is fixed to the lower panel 32 by bolts inserted through the bolt holes 325 to 333 herein described.

The lower panel 32 includes a plurality of first lock holes 81, a plurality of second lock holes 82, and a plurality of third lock holes 83. The first lock holes 81 and the second lock holes 82 are disposed along the extending portion 52. The first lock holes 81 are disposed along the right edge of the extending portion 52. The second lock holes 82 are disposed along the left edge of the extending portion 52. The third lock holes 83 are provided in the inner case 58.

It should be noted that in the drawings, reference numeral 81 is assigned to only part of the plural first lock holes 81 without being assigned to the others of the first lock holes 81. In the drawings, reference numeral 82 is assigned to only part of the plural second lock holes 82 without being assigned to the others of the second lock holes 82. In the drawing, reference numeral 83 is assigned to only part of the plural third lock holes 83 without being assigned to the others of the third lock holes 83.

As shown in FIG. 3, the upper panel 31 includes a plurality of first lock protrusions 84, a plurality of second lock protrusions 85, and a plurality of third lock protrusions 86. The plural first lock protrusions 84, the plural second lock protrusions 85, and the plural third lock protrusions 86 protrude from the inner surface of the upper panel 31. The lock protrusions 84 to 86 are locked to the lock holes 81 to 83, respectively, whereby the upper panel 31 is fixed to the lower panel 32.

It should be noted that in the drawing, reference numeral 84 is assigned to only part of the plural first lock protrusions 84 without being assigned to the others of the first lock protrusions 84. In the drawing, reference numeral 85 is assigned to only part of the plural second lock protrusions 85 without being assigned to the others of the second lock protrusions 85. In the drawing, reference numeral 86 is assigned to only part of the plural third lock protrusions 86 without being assigned to the others of the third lock protrusions 86.

In the straddled vehicle 1 according to the present embodiment, the extending portion 52, on which the loading hook 68 is disposed, is integrated with the bottom panel portion 51. Because of this, the load applied by an item hooked on the loading hook 68 is supported by the bottom panel portion 51 through the extending portion 52. Accordingly, the leg shield 22 is enhanced in strength for supporting the item. Besides, the extending portion 52 is fixed to the head pipe 11 through the loading hook 68. Because of this, the leg shield 22 can be inhibited from being made complicated in structure, while the lower panel 32 is enhanced in stiffness.

The straddled vehicle 1 is not limited to the scooter, and alternatively, may be another type of vehicle such as a moped. The embodiment is limited by the features of the appended claims. The structure of the leg shield 22 is not limited to that in the embodiment described above and may be changed. The structure of the upper panel 31 is not limited to that in the embodiment described above and may be changed. For example, the upper panel 31 may be composed of a plurality of panels separated from each other.

The structure of the lower panel 32 is not limited to that in the embodiment described above and may be changed. For example, the extending portion 52 may have another shape such as a triangular shape. The inner case 58 may be separated from the lower panel 32. The hinge portion 59 may be separated from the lower panel 32. The pocket portion 43 may be omitted. The trunk 46 may be omitted.

The loading hook 68 may be fixed to a component of the vehicle body frame 2 other than the head pipe 11. For example, the loading hook 68 may be fixed to the down frame 12. The loading hook 68 may be fixed to a stay attached to either the head pipe 11 or another component of the vehicle body frame 2. The structure of the loading hook 68 is not limited to that in the embodiment described above and may be changed. For example, the second hook portion 72 may be omitted. The retaining member 74 may be omitted.

### REFERENCE SIGNS LIST

2: Vehicle body frame, 5: Seat, 11: Head pipe, 12: Down frame, 22: Leg shield, 23: Foot board, 31: Upper panel, 32: Lower panel, 38: First side panel, 39: Second side panel, 43: Pocket portion, 44: First opening, 46: Trunk, 47: Second opening, 48; Lid portion, 51: Bottom panel portion, 52: Extending portion, 58: Inner case, 59: Hinge portion, 68: Loading hook

## Claims

1. A straddled vehicle (1) comprising:
a vehicle body frame (2) including a head pipe (11) and a down frame (12) extending downward from the head pipe (11) with regard to an up-and-down direction of the vehicle;
a leg shield (22) disposed behind the head pipe (11) and the down frame (12) with regard to a front-and-rear direction of the vehicle; and
a loading hook (68) disposed on the leg shield (22), wherein
the leg shield (22) includes
an upper panel (31), and
a lower panel (32) disposed below the upper panel (31) with regard to the up-and-down direction of the vehicle, the lower panel (32) is separated from the upper panel (31),
the lower panel (32) includes
a bottom panel portion (51), and
an extending portion (52) integrated with the bottom panel portion (51), the extending portion (52) is extending from the bottom panel portion (51) to an upper side than a lower end of the upper panel (31) with regard to the up-and-down direction of the vehicle, and
the loading hook (68) is fixed to the vehicle body frame (2) through the extending portion (52), **characterized in that**
the upper panel (31) includes a pocket portion (43), the pocket portion (43) including a first opening (44), the first opening (44) disposed lateral to the extending portion (52) with regard to a right-and-left direction of the vehicle,
the straddled vehicle (1) further comprises an inner case (58) disposed inside the upper panel (31), the inner case (58) is disposed in the pocket portion (43), and
the inner case (58) is connected to the lower panel (32).

2. The straddled vehicle (1) according to claim 1, **characterized by:**
a seat (5) disposed behind the leg shield (22) with regard to the front-and-rear direction of the vehicle; and
a foot board (23) disposed between the leg shield (22) and the seat (5), wherein
the bottom panel portion (51) is connected to the foot board (23).

3. The straddled vehicle (1) according to claim 1 or 2, **characterized in that** the inner case (58) is integrated with the lower panel (32).

4. The straddled vehicle (1) according to any one of claims 1 to 3, **characterized in that** the upper panel (31) includes a trunk (46) for accommodating an item,
the trunk (46) includes a second opening (47) and a lid portion (48), the second opening (47) is disposed lateral to the extending portion (52) with regard to the right-and-left direction of the vehicle, the lid portion (48) is configured for opening and closing the second opening (47),
the straddled vehicle (1) further comprises a hinge portion, the hinge portion (59) disposed in the trunk (46), the hinge portion (59) is supporting the lid portion (48) so as to make the lid portion (48) rotatable, and
the hinge portion (59) is connected to the lower panel (32).

5. The straddled vehicle (1) according to claim 4, **characterized in that** the hinge portion (59) is integrated with the lower panel (32).

6. The straddled vehicle (1) according to any one of claims 1 to 5, **characterized in that** the loading hook (68) is fixed to the head pipe (11).

7. The straddled vehicle (1) according to any one of claims 1 to 6, **characterized in that** the extending portion (52) extends in the up-and-down direction of the vehicle in a middle of the leg shield (22), the extending portion (52) is shaped to protrude rearward with regard to the front-and-rear direction of the vehicle.

8. The straddled vehicle (1) according to any one of claims 1 to 7, **characterized in that** the upper panel (31) is a painted component, and
the lower panel (32) is an unpainted component.

9. The straddled vehicle (1) according to claim 8, **characterized in that** the extending portion (52) is smaller than the bottom panel portion (51) in the right-and-left direction of the vehicle.

10. The straddled vehicle (1) according to claim 8 or 9, **characterized in that** the upper panel (31) includes a first side panel (38) disposed laterally on one side of the extending portion (52), and
the extending portion (52) is smaller than the first side panel (38) in the right-and-left direction of the vehicle.

11. The straddled vehicle (1) according to claim 10, **characterized in that** the upper panel (31) includes a second side panel (39) disposed laterally on the other side of the extending portion (52) with regard to the right-and-left direction of the vehicle, and the extending portion (52) is smaller than the second side panel (39) in the right-and-left direction of the vehicle.

## Patentansprüche

1. Ein Spreiz-Sitz-Fahrzeug (1), das umfasst:
einen Fahrzeugkörperrahmen (2), der ein Kopfrohr (11) und einem unteren Rahmen (12), der sich von dem Kopfrohr (11) in Bezug auf eine Auf-und-Ab-Richtung des Fahrzeugs nach unten erstreckt;
ein Beinschild (22), das hinter dem Kopfrohr (11) und dem unteren Rahmen (12) in Bezug auf eine Vorder-und-Rück-Richtung des Fahrzeugs angeordnet ist; und
einen Ladehaken (68), der an dem Beinschild (22) angeordnet ist, wobei der Beinschild (22) enthält
eine obere Platte (31), und
eine untere Platte (32), die in Bezug auf die Auf-und-Ab-Richtung des Fahrzeugs unterhalb der oberen Platte (31) angeordnet ist, die untere Platte (32) ist von der oberen Platte (31) getrennt,
die untere Platte (32) enthält
einem unteren Plattenabschnitt (51) und
einen Verlängerungsabschnitt (52), der mit dem unteren Plattenabschnitt (51) integriert ist, der Verlängerungsabschnitt (52) erstreckt sich von dem unteren Plattenabschnitt (51) zu einer oberen Seite weiter als ein unteres Ende der oberen Platte (31) in Bezug auf die Auf-und-Ab-Richtung des Fahrzeugs, und
der Ladehaken (68) ist durch den Verlängerungsabschnitt (52) an dem Fahrzeugkörperrahmen (2) befestigt, **dadurch gekennzeichnet, dass**
die obere Platte (31) einen Taschenabschnitt (43) enthält, der Taschenabschnitt (43) enthält eine erste Öffnung (44), die erste Öffnung (44) ist seitlich des Verlängerungsabschnitts (52) in Bezug auf eine Rechts-und-Links-Richtung des Fahrzeugs angeordnet,
das Spreiz-Sitz-Fahrzeug (1) weist weiterhin ein Innengehäuse (58) auf, das innerhalb der oberen Platte (31) angeordnet ist, das Innengehäuse (58) ist in dem Taschenabschnitt (43) angeordnet, und
das Innengehäuse (58) ist mit der unteren Platte (32) verbunden.

2. Das Spreiz-Sitz-Fahrzeug (1) gemäß Anspruch 1, **gekennzeichnet durch:**
einen Sitz (5), der hinter dem Beinschild (22) in Bezug auf die Vorder-und-Rück-Richtung des Fahrzeugs angeordnet ist; und
ein Fußbrett (23), das zwischen dem Beinschild (22) und dem Sitz (5) angeordnet ist, wobei
der untere Plattenabschnitt (51) mit dem Fußbrett (23) verbunden ist.

3. Das Spreiz-Sitz-Fahrzeug (1) gemäß Anspruch 1 oder 2, **dadurch gekennzeichnet, dass** das Innengehäuse (58) in die untere Platte (32) integriert ist.

4. Das Spreiz-Sitz-Fahrzeug (1) gemäß irgendeinem der Ansprüche 1 bis 3, **dadurch gekennzeichnet, dass** die obere Platte (31) ein Gepäckfach (46) zur Aufnahme eines Gegenstandes aufweist,
das Gepäckfach (46) eine zweite Öffnung (47) und einen Deckelteil (48) enthält, die zweite Öffnung (47) seitlich des Verlängerungsabschnitts (52) in Bezug auf die Rechts-Links-Richtung des Fahrzeugs angeordnet ist, der Deckelteil (48) zum Öffnen und Schließen der zweiten Öffnung (47) konfiguriert ist,
das Spreiz-Sitz-Fahrzeug (1) weiterhin einen Scharnierabschnitt aufweist, der Scharnierabschnitt (59) im Gepäckfach (46) angeordnet ist, der Scharnierabschnitt (59) den Deckelabschnitt (48) lagert, so dass der Deckelabschnitt (48) drehbar ist, und
der Scharnierabschnitt (59) mit der unteren Platte (32) verbunden ist.

5. Das Spreiz-Sitz-Fahrzeug (1) gemäß Anspruch 4, **dadurch gekennzeichnet, dass** der Scharnierabschnitt (59) in die untere Platte (32) integriert ist.

6. Das Spreiz-Sitz-Fahrzeug (1) gemäß irgendeinem der Ansprüche 1 bis 5, **dadurch gekennzeichnet, dass** der Ladehaken (68) am Kopfrohr (11) fixiert ist.

7. Das Spreiz-Sitz-Fahrzeug (1) gemäß irgendeinem der Ansprüche 1 bis 6, **dadurch gekennzeichnet, dass** der Verlängerungsabschnitt (52) sich in der Auf-und-Ab-Richtung des Fahrzeugs in einer Mitte des Beinschilds (22) erstreckt, der Verlängerungsabschnitt (52) ist geformt ist, um in Bezug auf die Vorder-und-Rück-Richtung des Fahrzeugs nach hinten vorzustehen.

8. Das Spreiz-Sitz-Fahrzeug (1) gemäß irgendeinem der Ansprüche 1 bis 7, **dadurch gekennzeichnet, dass** die obere Platte (31) ein lackiertes Bauteil ist, und
die untere Platte (32) ein unlackiertes Bauteil ist.

9. Das Spreiz-Sitz-Fahrzeug (1) gemäß Anspruch 8, **dadurch gekennzeichnet, dass** der Verlängerungsabschnitt (52) kleiner ist als der untere Plattenabschnitt (51) in der Rechts-und-Links-Richtung des Fahrzeugs.

10. Das Spreiz-Sitz-Fahrzeug (1) gemäß Anspruch 8 oder 9, **dadurch gekennzeichnet, dass** die obere Platte (31) eine erste Seitenplatte (38) enthält, die seitlich auf einer Seite des Verlängerungsabschnitts (52) angeordnet ist, und
der Verlängerungsabschnitt (52) in der Rechts-und-Links-Richtung des Fahrzeugs kleiner als die erste Seitenplatte (38) ist.

11. Das Spreiz-Sitz-Fahrzeug (1) gemäß Anspruch 10, **dadurch gekennzeichnet, dass** die obere Platte (31) eine zweite Seitenplatte (39) enthält, die seitlich auf der anderen Seite des Verlängerungsabschnitts (52) in Bezug auf die Rechts-und-Links-Richtung des Fahrzeugs angeordnet ist, und
der Verlängerungsabschnitt (52) in der Rechts-und-Links-Richtung des Fahrzeugs kleiner als die zweite Seitenplatte (39) ist.

## Revendications

1. Véhicule à selle (1) comprenant :
un cadre de véhicule (2) incluant un tube de fourche (11) et une partie basse de cadre (12) s'étendant vers le bas à partir du tube de fourche (11) par rapport à la direction haut bas du véhicule,
un tablier (22) placé derrière le tube de fourche (11) et la partie basse de cadre (12) par rapport à la direction avant arrière du véhicule, et
un crochet de chargement (68) placé sur le tablier (22), où
le tablier (22) inclut :
un panneau supérieur (31), et
un panneau inférieur (32) placé en dessous du panneau supérieur (31) par rapport à la direction haut bas du véhicule, le panneau inférieur (32) étant séparé du panneau supérieur (31),
le panneau inférieur (32) inclut :
une partie de panneau de fond (51), et
une partie d'extension (52) intégrée à la partie de panneau de fond (51), la partie d'extension (52) s'étendant depuis la partie de panneau de fond (51) jusqu'au côté supérieur plus que l'extrémité inférieure du panneau supérieur (31) par rapport à la direction haut bas du véhicule, et
le crochet de chargement (68) est fixé au cadre du véhicule (2) par l'intermédiaire de la partie d'extension (52), **caractérisé en ce que** :
le panneau supérieur (31) inclut une cavité (43), la cavité (43) incluant une première ouverture (44), la première ouverture (44) placée latéralement par rapport à la partie d'extension (52) par rapport à la direction droite gauche du véhicule,
le véhicule à selle (1) comprend en outre un carter interne (58) placé à l'intérieur du panneau supérieur (31), le carter interne (58) étant placé dans la cavité (43) et le carter interne (58) étant relié au panneau inférieur (32).

2. Véhicule à selle (1) selon la revendication 1, **caractérisé par :**
un siège (5) est placé derrière le tablier (22) par rapport à la direction avant arrière du véhicule, et
un marchepied (23) est placé entre le tablier (22) et le siège (5), où
la partie de panneau de fond (51) est reliée au marchepied (23) .

3. Véhicule à selle (1) selon la revendication 1 ou la revendication 2, **caractérisé en ce que** le carter interne (58) est intégré avec le panneau inférieur (32).

4. Véhicule à selle (1) selon l'une quelconque des revendications 1 à 3, **caractérisé en ce que :**
le panneau supérieur (31) inclut un coffre (46) permettant d'accueillir un objet,
le coffre (46) inclut une seconde ouverture (47) et un couvercle (48), la seconde ouverture (47) est placée latéralement par rapport à la partie d'extension (52) dans la direction droite gauche du véhicule, le couvercle (48) est configuré pour ouvrir et fermer la seconde ouverture (47),
le véhicule à selle (1) comprend en outre une articulation, l'articulation (59) placée dans le coffre (46), l'articulation (59) supportant le couvercle (48) de façon à ce que le couvercle (48) puisse tourner, et
l'articulation (59) est reliée au panneau inférieur (32) .

5. Véhicule à selle (1) selon la revendication 4, **caractérisé en ce que** l'articulation (59) est intégrée au panneau inférieur (32).

6. Véhicule à selle (1) selon l'une quelconque des revendications 1 à 5, **caractérisé en ce que** le crochet de chargement (68) est fixé au tube de fourche (11).

7. Véhicule à selle (1) selon l'une quelconque des revendications 1 à 6, **caractérisé en ce que** la partie d'extension (52) se déploie dans la direction haut bas du véhicule au milieu du tablier (22), la partie d'extension (52) étant façonnée pour dépasser vers l'arrière par rapport à la direction avant arrière du véhicule.

8. Véhicule à selle (1) selon l'une quelconque des revendications 1 à 7, **caractérisé en ce que :**
le panneau supérieur (31) est un composant peint, et
le panneau inférieur (32) est un composant non peint.

9. Véhicule à selle (1) selon la revendication 8, **caractérisé en ce que** la partie d'extension (52) est plus petite que la partie de panneau de fond (51) dans la direction droite gauche du véhicule.

10. Véhicule à selle (1) selon la revendication 8 ou la revendication 9, **caractérisé en ce que** le panneau supérieur (31) inclut un premier panneau latéral (38) placé latéralement sur un côté de la partie d'extension (52), et
la partie d'extension (52) est plus petite que le premier panneau latéral (38) dans la direction droite gauche du véhicule.

11. Véhicule à selle (1) selon la revendication 10, **caractérisé en ce que** le panneau supérieur (31) inclut un second panneau latéral (39) placé latéralement sur l'autre côté de la partie d'extension (52) par rapport à la direction droite gauche du véhicule, et
la partie d'extension (52) est plus petite que le second panneau latéral (39) dans la direction droite gauche du véhicule.
